# EUROPEAN PATENT APPLICATION

(11) **EP 4 704 240 A1**
(43) Date of publication of application: **04.03.2026**
(21) Application number: 24796663.3
(22) Date of filing: 25.03.2024
(51) Int. Cl.: H01M 50/367, H01M 50/204, H01M 50/213, H01M 50/224, H01M 50/231, H01M 50/271, H01M 50/342

(54) **POWER SUPPLY DEVICE**

(30) Priority: 28.04.2023 JP 2023075246
(71) Applicant: Panasonic Intellectual Property Management Co., Ltd., Kadoma-shi, Osaka 571-0057 (JP)
(72) Inventor: SAKAMOTO, Tomonori, kadoma-shi, Osaka 571-0057 (JP)
(74) Representative: Novagraaf International SA
(86) International application number: PCT/JP2024/011688
(87) International publication number: WO 2024/224905

(57) **Abstract**

In a power supply device, an inner case accommodating secondary battery cells each including a relief valve is covered with an outer case. The inner case includes an inner-side plate and an outer-side plate which constitute an outer circumferential wall of the inner case. Portions of the inner-side plate and the outer-side plate overlap each other at a laminated portion constituting a laminated structure of the inner case. The laminated portion has a recess partially provided in one or both of a surface of the inner-side plate and a surface of the outer-side plate which face each other. The recess constitutes a gas-exhaust duct closed between the inner-side and outer-side plates. The gas-exhaust duct communicates with an inside of the inner case through an inner-side opening formed in the inner-side plate and communicates with an outside of the inner case through an outer-side opening formed in the outer-side plate. The inner-side opening and the outer-side opening are disposed at opposite ends of the gas-exhaust duct.

## Description

### TECHNICAL FIELD

The present disclosure relates to a power supply device including secondary battery cells accommodated in an outer case, and more particularly to a power supply device in which secondary battery cells each including a relief valve configured to open when an internal pressure of each cell is higher than a predetermined pressure are accommodated in an outer case.

### BACKGROUND ART

Power supply devices accommodating a battery block including battery cells in an outer case are used for various power sources, such as power sources for electricity storage systems for factory use, home use, and the like, as well as power sources for vehicles such as hybrid electric vehicles and battery electric vehicles. These power supply devices include battery cells as a battery block in an outer case. In order to ensure safety, the battery cell includes a relief valve. The relief valve of the cell opens when an internal pressure of the cell rises higher than a predetermined pressure in the event of a fault condition to prevent a battery case from rupturing. The relief valve opens in abnormal use condition of the battery cell, so that gas and other ejected materials exhausted from the valve have high temperature and high pressure, which may cause various thermal damages. If the ejected material exhausted from the battery cell is released outside the outer case while remaining at a high temperature, it may cause a flame emission. Therefore, for safety reasons, a structure is required to prevent an outer flame that is caused by the flame resulting from the material ejected from the battery cell.

In order to handle such a situation, a structure in which the gas and other ejected materials are allowed to pass through a maze-like exhaust path inside the outer case to gradually reduce the pressure and temperature so that high-temperature and high-pressure ejected materials cannot be released to the outside of the outer case while remaining at a high temperature and high pressure even if a hazardous event occurs in battery cells (see PTL 1).

### CITATION LIST

### Patent Literature

PTL 1: International Publication No. WO2020/166501

### SUMMARY

The structure mentioned above has a feature that it allows the gas and other ejected materials to be effectively cooled and exhausted utilizing an outer case and walls that are made of metal. Although the sizes of power supply devices vary from small ones to large ones, the above-mentioned system is used primarily for small-sized power supply devices. In recent years, there has been a demand for higher power and higher capacity power supply devices. To meet this demand, power supply devices have larger numbers of battery cells in addition to the use of higher capacity battery cells. In this cases, a structure is required that efficiently reduces the pressure and temperature due to a large amount of ejected materials exhausted from the relief valves within the outer case.

A power supply device of an aspect of the present disclosure includes: a plurality of secondary battery cells each of the plurality of secondary battery cells including a relief valve configured to open when an internal pressure of the each of the plurality of secondary battery cells exceeds a predetermined pressure; an inner case accommodating the plurality of secondary battery cells therein; and an outer case covering the inner case. The inner case includes an inner-side plate and an outer-side plate which constitute an outer circumferential wall of the inner case, and a portion of the inner-side plate and a portion of the outer-side plate overlap each other at a laminated portion constituting a laminated structure of the inner case. The laminated portion has a recess partially provided in one or both of a surface of the inner-side plate and a surface of the outer-side plate which face each other, the recess having a predetermined depth and extending along planar directions, the recess constituting a gas-exhaust duct closed between the inner-side plate and the outer-side plate. The gas-exhaust duct communicates with an inside of the inner case through an inner-side opening formed in the inner-side plate and communicates with an outside of the inner case through an outer-side opening formed in the outer-side plate. The inner-side opening and the outer-side opening are disposed at opposite ends of the gas-exhaust duct.

The power supply device of the present disclosure has an advantage that it can safely exhaust gas or foreign substances to the outside of the outer case even when a hazardous event occurs in a secondary battery cell accommodated in the outer case, causing a large amount of gas or foreign substances to be exhausted. The reason is that the power supply device of the present disclosure includes a closed gas-exhaust duct in the laminated portion of the outer circumferential wall of the inner case. The high temperature and high pressure gas is guided through the inner-side opening to the gas-exhaust duct, passed through the gas-exhaust duct, and then, exhausted to the outside of the inner case through the outer-side opening. This means that the exhaust path is long so that the gas can be exhausted to the outside of the inner case with its pressure and temperature reduced. Furthermore, even if the exhausted gas reaches a temperature below the spontaneous ignition temperature, an ignited outer flame may occur when there is a spark that can be an ignition source. Nevertheless, the spark, which tend to travel in a straight line, is prevented from passing through the gas-exhaust duct in a closed structure that is provided in the laminated portion of the outer circumferential wall of the inner case.

### BRIEF DESCRIPTION OF THE DRAWINGS

FIG. 1 is a perspective view of a power supply device according to Exemplary Embodiment 1 of the present disclosure.
FIG. 2 is a vertical cross-sectional view of the power supply device at line II-II shown in FIG. 1.
FIG. 3 is a vertical cross-sectional view of the power supply device at line III-III shown in FIG. 1.
FIG. 4 is a horizontal cross-sectional view of the power supply device at line IV-IV shown in FIG. 1.
FIG. 5 is an exploded perspective view of the power supply device shown in FIG. 1.
FIG. 6 is a rear exploded perspective view of the power supply device shown in FIG. 5 viewed from below.
FIG. 7 is an exploded perspective view of an inner case shown in FIG. 5.
FIG. 8 is a rear exploded perspective view of the inner case shown in FIG. 7 viewed from below.
FIG. 9 is an enlarged cross-sectional view of the power supply device shown in FIG. 2 for illustrating a gas-exhaust duct.
FIG. 10 is an enlarged plan view of a battery assembly shown in FIG. 4.
FIG. 11 is an enlarged cross-sectional view of a power supply device according to Exemplary Embodiment 2 of the present disclosure.
FIG. 12 is an enlarged cross-sectional view of a power supply device according to Exemplary Embodiment 3 of the present disclosure.
FIG. 13 is an enlarged cross-sectional view of a power supply device according to Exemplary Embodiment 4 of the present disclosure.
FIG. 14 is an enlarged cross-sectional view of a power supply device according to Exemplary Embodiment 5 of the present disclosure.

### DESCRIPTION OF EMBODIMENT

A power supply device of an aspect exemplary embodiment the present disclosure includes: a plurality of secondary battery cells each of the plurality of secondary battery cells including a relief valve configured to open when an internal pressure of the each of the plurality of secondary battery cells exceeds a predetermined pressure; an inner case accommodating the plurality of secondary battery cells therein; and an outer case covering the inner case. The inner case includes an inner-side plate and an outer-side plate which constitute an outer circumferential wall of the inner case. A portion of the inner-side plate and a portion of the outer-side plate overlap each other at a laminated portion constituting a laminated structure of the inner case. The laminated portion has a recess partially provided in one or both of a surface of the inner-side plate and a surface of the outer-side plate which face each other. The recess has a predetermined depth and extends in planar directions, the recess constituting a gas-exhaust duct closed between the inner-side plate and the outer-side plate. The gas-exhaust duct communicates with an inside of the inner case through an inner-side opening formed in the inner-side plate and communicates with an outside of the inner case through an outer-side opening formed in the outer-side plate. The inner-side opening and the outer-side opening are disposed at opposite ends of the gas-exhaust duct.

In the above-described configuration, even if a secondary battery cell accommodated in the inner case causes a hazardous event and exhausts a high temperature and high pressure gas, the high temperature and high pressure gas are guided into the gas-exhaust duct provided in the laminated portion of the inner case through the inner-side opening, allowed to pass through the gas-exhaust duct, and then, extended to the outside of the inner case through the outer-side opening. This configuration allows the exhaust path to be longer so that the gas may be exhausted to the outside of the inner case with its pressure and temperature reduced, whereby safety can be increased when the high temperature and high pressure gas is released outside from the outer case.

Moreover, in the above-described configuration, the inner case is reinforced due to a portion of the outer circumferential wall of the inner case formed into a laminated structure, while the gas-exhaust duct is formed by the recess extending in planar directions and having a predetermined depth that is provided in either one or both of opposing surfaces of the inner-side plate and the outer-side plate to form the gas-exhaust duct closed between the inner-side plate and the outer-side plate. Therefore, the closed duct is formed in the outer circumferential wall of the inner case easily and reliably. Furthermore, because the inner-side opening and the outer-side opening that communicate with the gas-exhaust duct are disposed at the opposite ends of the gas-exhaust duct, the exhaust path of the ejected materials passing through the gas-exhaust duct is made longer, so that the pressure and temperature thereof can be reduced efficiently.

In a power supply device according to another aspect of the present disclosure, the surface of the inner-side plate facing the outer-side plate may have the recess formed therein. The surface of the outer-side plate facing the inner-side plate may have another recess formed therein. The recess of the inner-side plate and the another recess of the outer-side plate may face each other to form the gas-exhaust duct with a closed structure.

With the above-described configuration, the recess provided in the inner-side plate and the recess provided in the outer-side plate face each other to form the closed gas-exhaust duct. This configuration increases the volumetric capacity of the gas-exhaust duct, increasing the amount of the gas that is allowed to pass through the gas-exhaust duct, to effectively reduce the energy. Moreover, both of the inner-side plate and the outer-side plate having the recess enhance the strength of the laminated portion.

In a power supply device according to still another aspect of the present disclosure, the surface of the inner-side plate facing the outer-side plate may have the recess formed therein. The outer-side plate may have a planar shape. The recess of the inner-side plate may be closed by the outer-side plate to form the gas-exhaust duct of a closed structure.

With the above-described configuration, the recess provided in the inner-side plate is closed by the planar-shaped outer-side plate to form the gas-exhaust duct of a closed structure, so that the gas-exhaust duct can be provided in the outer circumferential wall without increasing the size of the outer shape of the inner case.

In a power supply device according to still another aspect of the present disclosure, the surface of the outer-side plate facing the inner-side plate may have the recess formed therein. The inner-side plate may have a planar shape. The recess of the outer-side plate may be closed by the inner-side plate to form the gas-exhaust duct of a closed structure.

With the above-described configuration, the recess provided in the outer-side plate is closed by the planar-shaped inner-side plate to form the gas-exhaust duct of a closed structure, so the planar-shaped inner-side plate can be disposed near the secondary battery cells. As a result, the size of the inner shape of the inner case can be reduced, and accordingly, the size of the outer shape of the inner case can be reduced.

In a power supply device according to still another aspect of the present disclosure, the laminated portion of the inner case may include an intermediate plate disposed between the inner-side plate and the outer-side plate. A surface of the inner-side plate facing the intermediate plate may have the recess formed therein. A surface of the outer-side plate facing the intermediate plate has another recess formed therein. The recess of the inner-side plate and the another recess of the outer-side plate may be laminated on the intermediate plate at a position such that the recess of the inner-side plate faces the another recess of the outer-side plate to form the gas-exhaust duct of a closed structure. The gas-exhaust duct may be partitioned into an inner duct and an outer duct by the intermediate plate. The inner duct and the outer duct may communicate with each other through an intermediate opening formed in the intermediate plate at one of one end portion of the inner duct and one end portion of the outer duct. The inner-side opening may be formed at another end portion of the inner duct, and the outer-side opening may be formed at another end portion of the outer duct.

With the above-described configuration, the laminated portion of the inner case has a triple wall structure so that the gas-exhaust duct may be partitioned into the inner duct and the outer duct by the intermediate plate laminated between the recess of the inner-side plate and the other recess of the outer-side plate, and one ends of the inner duct and the outer duct are allowed to communicate with each other by the intermediate opening. As a result, the exhaust path of the gas-exhaust duct is made further longer, so that the ejected materials can be exhausted to the outside of the inner case with the pressure and temperature further reduced.

In a power supply device according to still another aspect of the present disclosure, the inner case may include an upper-surface plate and an inner-surface plate, the upper-surface plate being connected to outer-side plates at opposite ends thereof, each of the outer-side plates being the outer-side plate, a portion of the upper-surface plate and a portion of the inner-surface plate being laminated on each other to constitute an upper laminated portion. An inner surface of the upper-surface plate facing the inner-surface plate at the upper laminated portion may have a recess partially formed therein, the recess extending in a width direction intersecting an extending direction of the outer-side plate in plan view, the recess constituting a upper gas-exhaust duct od a closed structure between the upper-surface plate and the inner-surface plate. The upper gas-exhaust duct may communicate with an inside of the inner case through an inner-surface opening formed in the inner-surface plate and communicate with an outside of the inner case through upper-surface openings formed in the upper-surface plate. The inner-surface opening may be formed at a laterally middle position of the upper-surface plate, and the upper-surface openings may be formed on laterally opposite end positions of the upper-surface plate.

With the above-described configuration, the upper surface of the inner case has a laminated structure, and the upper laminated portion in which the inner-surface plate is laminated on the inside of the upper plate forms the upper gas-exhaust duct between the upper-surface plate and the inner-surface plate, so that the gas and other ejected materials exhausted from a secondary battery cell can be passed through the upper gas-exhaust duct and exhausted to the outside. As a result, the gas may be exhausted also from the upper surface of the inner case while reducing the pressure and temperature. In particular, in this upper gas-exhaust duct, the inner-surface opening is formed at the laterally middle position of the inner-surface plate and the upper-surface opening is formed at laterally opposite end positions of the upper-surface plate. Therefore, it is possible to effectively pass and exhaust the ejected material ejected from the center area of the plurality of secondary battery cells accommodated inside the inner case through the upper gas-exhaust duct to the outside. As a result, even if a fault condition occurs in a secondary battery cell in the center area, the ejected material is quickly exhausted to the outside while reducing adverse effects on surrounding secondary battery cells. Moreover, with the above-described configuration, the upper surface of the inner case is formed into a laminated structure, so that the inner case can be reinforced.

In a power supply device according to still another aspect of the present disclosure, the inner case may be made of metal, and the recess may be formed in the inner-side plate or the outer-side plate by a drawing process.

With the above-described structure, because the recess is formed in the inner-side plate or the outer-side plate made of metal by a drawing process, the recess in a predetermined shape may be formed simply and easily while the rigidity of the inner-side plate or the outer-side plate provided with the recess by a drawing process is increased to reinforce the inner case.

In a power supply device according to still another aspect of the present disclosure, a plurality of gas-exhaust ducts are provided in opposing side walls of the inner case, each of the plurality of gas-exhaust ducts being the gas-exhaust duct.

The above-described structure has a feature that, even in a state in which a large amount of gas is exhausted from secondary battery cells and filled inside the inner case, the gas can be exhausted to the outside through the plurality of gas-exhaust ducts efficiently and in a well-balanced manner because the plurality of gas-exhaust ducts are provided in the opposing side walls of the inner case. Another feature is that the strength of the inner case can be increased by providing the plurality of gas-exhaust ducts in the side walls.

In a power supply device according to still another aspect of the present disclosure, the inner case may include: a lower case including a lower-surface plate and inner-side plates connected perpendicularly to opposite ends of the lower-surface plate, each of the inner-side plates being the inner-side plate; and an upper case including an upper-surface plate and outer-side plates connected perpendicularly to opposite ends of the upper-surface plate, each of the outer-side plates being the outer-side plate. The lower case and the upper case may be connected to each other such that each of the inner-side plates is laminated on a corresponding one of the outer-side plates.

With the above-described configuration, the lower case including the inner-side plates on its opposite ends and the upper case including the outer-side plates on its opposite ends are connected to each other, so that side walls of the inner case may have a laminated structure readily and easily while providing the gas-exhaust duct in the laminated portion.

In a power supply device according to still another aspect of the present disclosure, the each of the plurality of secondary battery cells is disposed in the inner case such that a surface of the each of the plurality of secondary battery cells at which the relief valve is disposed faces upward. The gas-exhaust duct may extend upward and downward, such that the inner-side opening opens in a lower part of the gas-exhaust duct, and the outer-side opening opens in an upper part of the gas-exhaust duct.

With the above-described configuration, the gas exhausted from a relief valve of a secondary battery cell disposed in such a posture as to orient the relief valve upward may may flow from the upper surface end toward the lower end inside the inner case, then, is guided through the inner-side opening formed in the lower part into the gas-exhaust duct, and is then exhausted through the outer-side opening formed in the upper part to the outside of the inner case. As a result, the gas exhaust path is long enough to reduce the temperature and pressure of the gas more effectively.

In a power supply device according to still another aspect of the present disclosure, the each of the plurality of secondary battery cells may be disposed in the inner case such that a surface of the each of the plurality of secondary battery cells at which the relief valve is provided faces downward. The gas-exhaust duct may extend upward and downward, such that the inner-side opening opens in an upper part of the gas-exhaust duct, and the outer-side opening opens in a lower part of the gas-exhaust duct.

With the above-described configuration, the gas exhausted from a relief valve of a secondary battery cell disposed in such a posture as to orient the relief valve downward is allowed to flow from the lower surface end toward the upper end inside the inner case, is thereafter guided through the inner-side opening formed in the upper part into the gas-exhaust duct, and is then exhausted through the outer-side opening formed in the lower part to the outside of the inner case. As a result, the gas exhaust path can be made longer to reduce the temperature and pressure of the gas more effectively.

In a power supply device according to still another aspect of the present disclosure, the recess constituting the gas-exhaust duct may extend upward and downward, may have a rectangular shape in front view, and may have a lateral width extending in a lateral direction. The inner-side opening and the outer-side opening may have slit shapes extending in a direction of the lateral width.

With the above-described configuration, while the gas-exhaust duct extending in a vertical direction has a lateral width extending in a lateral direction to increase the volumetric capacity of the gas-exhaust duct, the inner-side opening and the outer-side opening are formed in a slit shape extending in the lateral width direction, so that a large amount of gas can be allowed to pass through the gas-exhaust duct efficiently.

In a power supply device according to still another aspect of the present disclosure, the outer case may have a plurality of holes formed in an outer surface of the outer case. The plurality of holes may be configured to allow gas to pass through. The plurality of holes may be made of a metal mesh or a punched metal.

The above-described configuration allows the high temperature and high pressure gas released from the inner case to be released to the outside of the outer case through the plurality of holes. In particular, by using a metal mesh or punched metal, it is possible to easily provide the plurality of holes in the outer case, and also, by allowing the gas to pass through the metal mesh or punched metal, it is possible to reduce the temperature of the gas by removing the heat efficiently.

Exemplary embodiments of the present disclosure will be described below with reference to the drawings. It should be noted, however, that the following exemplary embodiments are merely examples for embodying the technical ideas of the present invention, and the present invention is not limited to the following exemplary embodiments. In addition, the present description is in no way provided for limiting the members shown in the claims to the members illustrated in the exemplary embodiments. Moreover, the dimensions, materials, shapes, and relative arrangements of parts and elements described in the following exemplary embodiments are merely illustrative examples, and should not be construed to limit the scope of the invention, unless specifically stated otherwise. Furthermore, the sizes of some elements, their positional relationships, and so forth shown in the drawings may be exaggerated for clarity in illustration. In the following description, similar names and symbols refer to same or similar elements, and detailed description thereof will not be given as appropriate. Furthermore, each of the elements that constitute the present disclosure may be embodied by an embodiment in which one member serves as a plurality of elements so that the plurality of elements are composed of the same member, or conversely, may be achieved in such an embodiment in which the function of one member is shared among a plurality of members.

The power supply device of the present disclosure is suitable for use in stationary-type electricity storage applications, such as power sources for electricity storage systems for home uses, office uses, and factory uses and backup power sources for servers, or in power sources for vehicles such as hybrid electric vehicles and battery electric vehicles. A power supply device used as a power source for an electricity storage system will be described below as exemplary embodiments of the present disclosure.

### Exemplary Embodiment 1

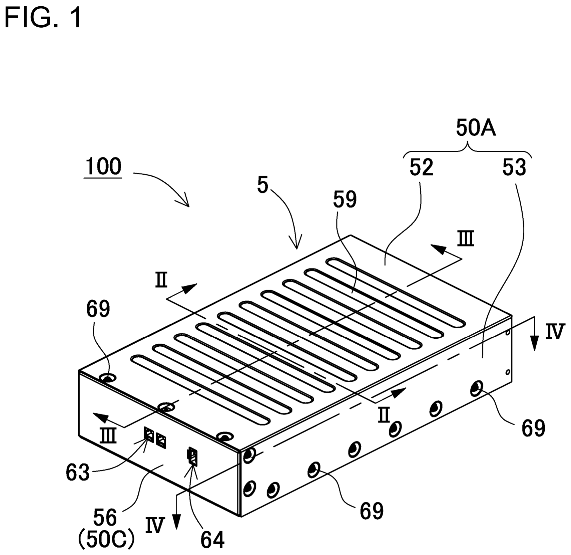

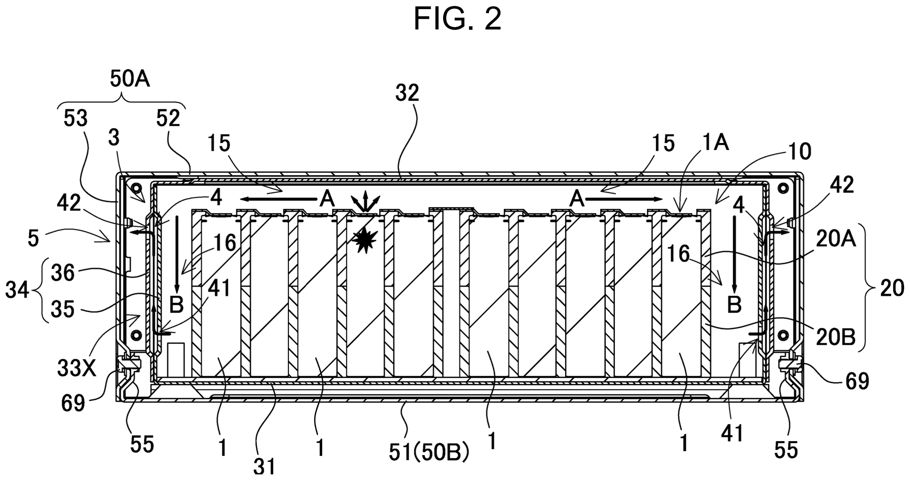

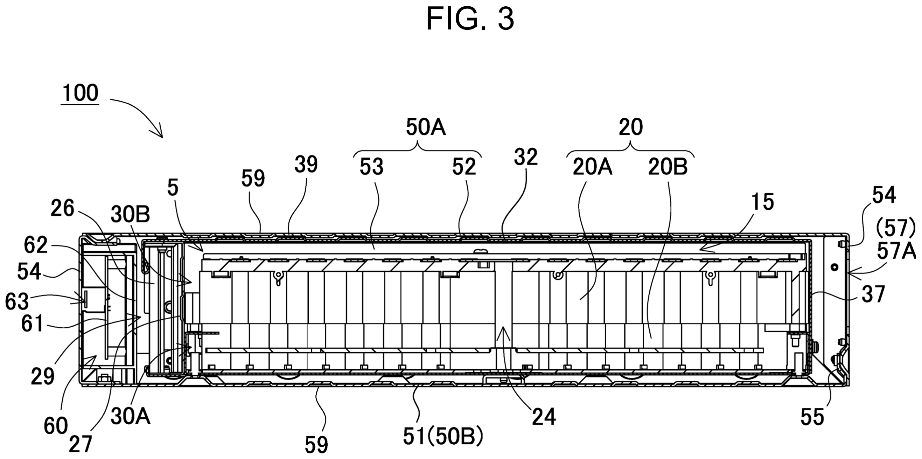

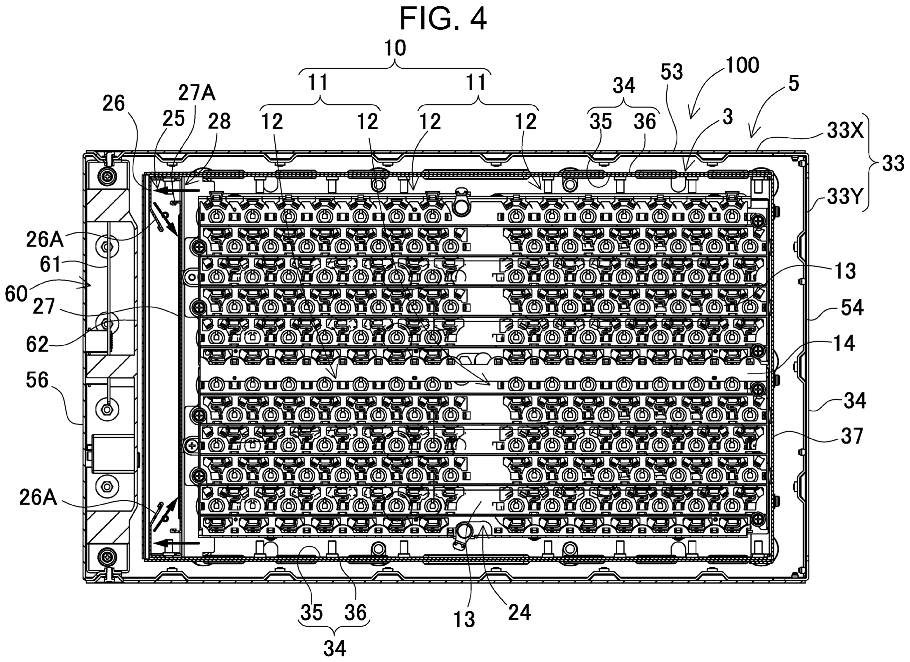

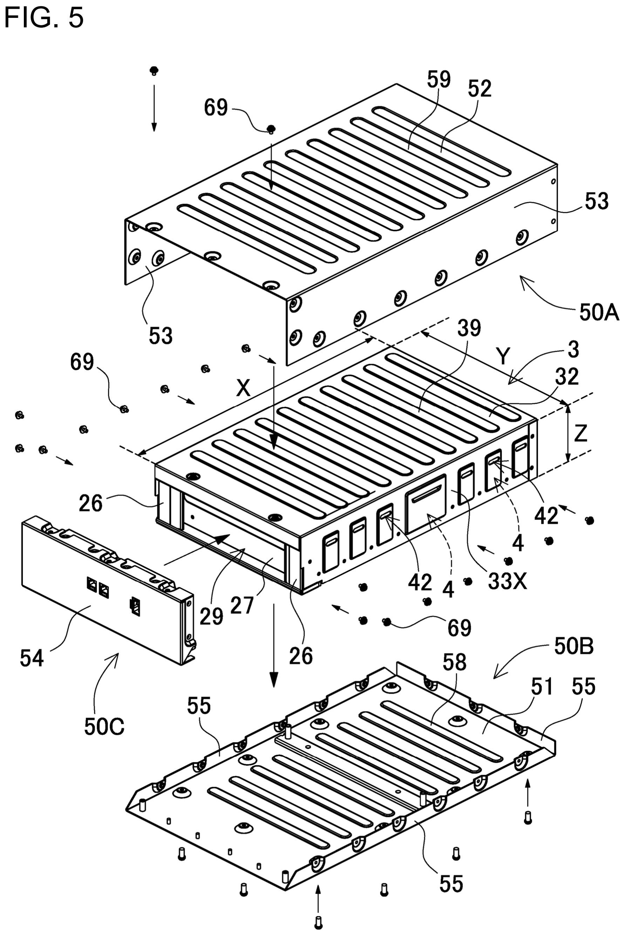

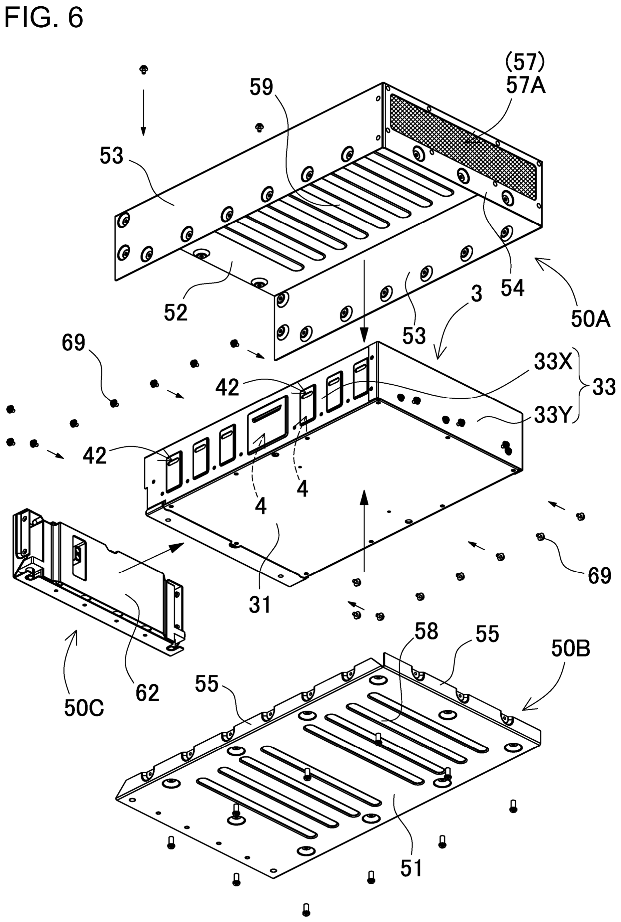

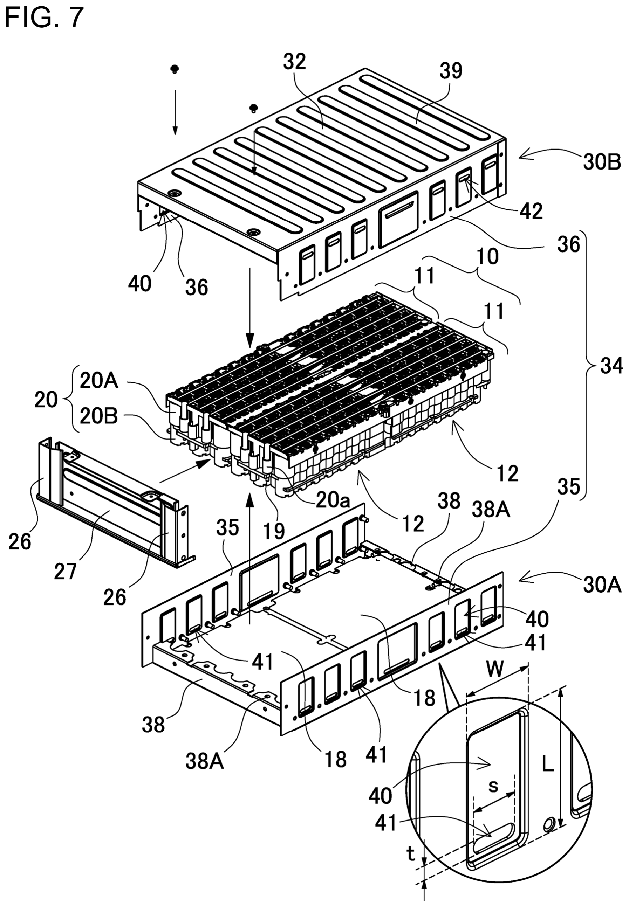

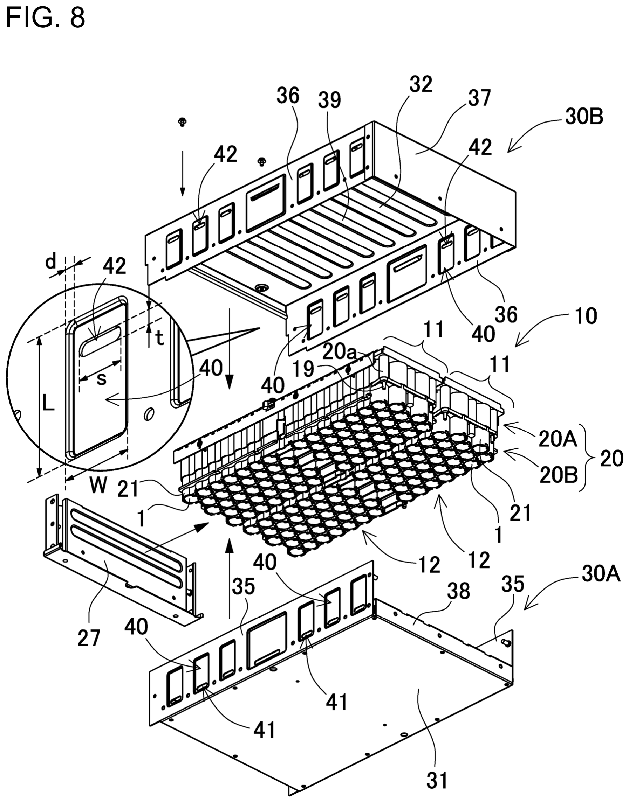

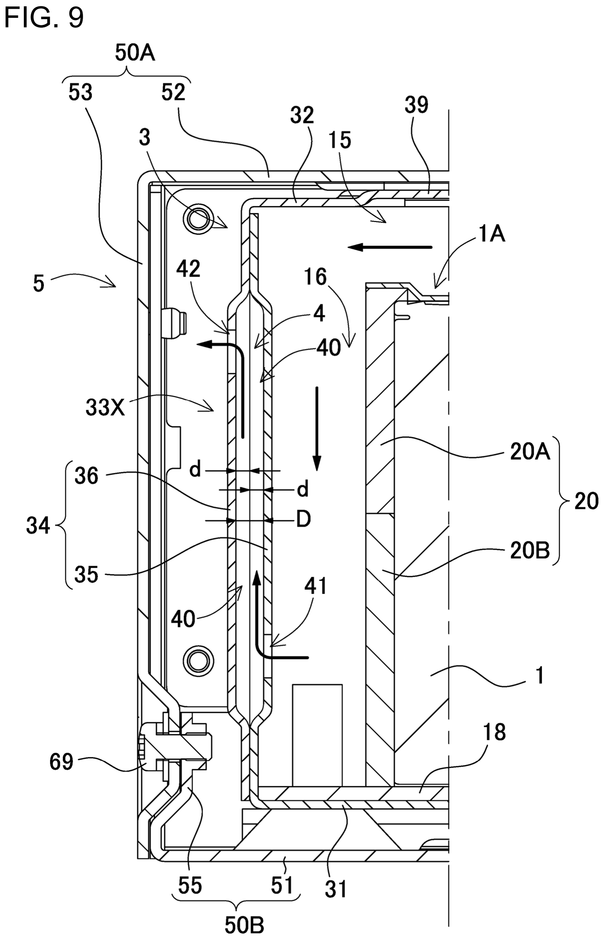

A power supply device according to Exemplary Embodiment 1 of the present disclosure is shown in FIGS. 1-9. FIG. 1 is a perspective view of a power supply device according to Exemplary Embodiment 1 of the present disclosure. FIG. 2 is a cross-sectional view of the power supply device at line II-II shown in FIG. 1 . FIG. 3 is a cross-sectional view of the power supply device at line III-III shown in FIG. 1. FIG. 4 is a horizontal cross-sectional view of the power supply device of FIG. 1 at line IV-IV. FIG. 5 is an exploded perspective view of the power supply device shown in FIG. 1. FIG. 6 is a rear exploded perspective view of the power supply device of FIG. 5 viewed from below. FIG. 7 is an exploded perspective view of an inner case. FIG. 8 is a rear exploded perspective view of the inner case shown in FIG. 7 viewed from below. FIG. 9 is an enlarged cross-sectional view illustrating a gas-exhaust duct of the inner case.

Power supply device 100 shown in these drawings include secondary battery cells 1, inner case 3 accommodating secondary battery cells 1, and outer case 5 covering inner case 3. Inner case 3 includes inner-side plate 35 and outer-side plate 36 which constitute outer circumferential wall 33 of inner case 3. A portion of inner-side plate 35 and a portion of outer-side plate 36 overlap each other at laminated portion 34 constituting a laminated structure of inner case 3. Laminated portion 34 has recess 40 partially provided in one or both of a surface of inner-side plate 35 and a surface of outer-side plate 36 which face each other. Recess 40 has a predetermined depth and extends along plainer directions. Recess 40 constitutes gas-exhaust duct 4 closed between inner-side plate 35 and outer-side plate 36. Gas-exhaust duct 4 communicates with an inside of inner case 3 through inner-side opening 41 formed in inner-side plate 35 and communicates with an outside of inner case 3 through outer-side opening 42 formed in outer-side plate 36. Inner-side opening 41 and outer-side opening 42 are disposed at opposite ends of gas-exhaust duct 4. Power supply device 100 is configured to guide the gas and other ejected materials, which are exhausted from secondary battery cells 1, from inner-side opening 41 to gas-exhaust duct 4, and exhaust the ejected materials that have passed through gas-exhaust duct 4 from outer-side opening 42 to the outside of inner case 3.

Power supply device 100 of the present disclosure has a structure in which secondary battery cells 1 are accommodated in inner case 3, and inner case 3 is covered with outer case 5, and in particular, the temperature and pressure of the gas and other ejected materials that are exhausted from secondary battery cells 1 are reduced by inner case 3 to exhaust it outside. Accordingly, as for the structures other than that of inner case 3, the present disclosure may adopt all other structures that have already been employed in the past or will be developed in the future. Exemplary structure of inner case 3 will be detailed below while illustrating examples of the accommodating configurations of secondary battery cells 1 accommodated in inner case 3 and the configurations of outer case 5 for covering inner case 3.

### Secondary Battery Cell 1

In power supply device 100 shown in FIGS. 2, 4, 7, and 8, secondary battery cells 1 are accommodated in inner case 3. Each secondary battery cell 1 is a cylindrical secondary battery with an outer can with a cylindrical shape. Cylindrical secondary battery cell 1 includes a closed-bottomed cylindrical tubular can made of metal accommodating an electrode body and filled with electrolyte solution therein, and a sealing element air-tightly closed closing an opening of the outer can by a crimping process. The sealing element is air-tightly secured to the outer can via an insulating member. The sealing element includes a relief valve configured to open when the internal pressure of the can exceeds a predetermined pressure to exhaust the gas and other ejected materials. Cylindrical secondary battery cell 1 has an end surface closed with the sealing element as first end surface 1A, and an outer peripheral edge of first end surface 1A includes a ring-shaped crimped protruding thread formed by a crimping process. In cylindrical secondary battery cell 1, the sealing element and the outer can function as a positive electrode and a negative electrode, respectively.

For this type of secondary battery cell 1, a non-aqueous electrolyte secondary battery, such as a lithium-ion secondary battery, which has high energy efficiency may be suitably used. However, the power supply device of the present disclosure does not limit the secondary battery cells to lithium-ion secondary batteries. For the secondary battery cells, it is possible to use any type of rechargeable batteries, such as nickel metal-hydride batteries and nickel cadmium batteries.

### Battery Holder 20

Secondary battery cells 1 are disposed at fixed positions in a predetermined posture with battery holder 20. Secondary batteries 1 are disposed parallel to one another, each in a vertical posture in which first end surface 1A including the relief valve faces upward. Battery holder 20 includes retainers 21 that accommodate secondary battery cells 1 therein, respectively, to cover and retain outer circumferential surfaces of secondary battery cells 1, and holds secondary battery cells 1 at fixed positions with retainers 21. Battery holder 20 shown in FIGS. 2, 7, and 8 is divided into first holder 20A and second holder 20B at a midpoint of a longitudinal axis of secondary battery cells 1 to hold secondary battery cells 1 at fixed positions by sandwiching them from both ends. Battery holder 20 shown in FIG. 2 holds secondary battery cells 1 parallel to one another such that first end surfaces 1A are arranged on the same plane.

Battery holder 20 shown in FIGS. 7 and 8 includes retainers 21 such that secondary battery cells 1 are accommodated in a bale stacking arrangement in plan view. Thus, the structure in which secondary battery cells 1 are arrayed in a bale stack arrangement saves space by arranging adjacent rows of secondary battery cells 1 so as to be positioned in respective recessed gaps between secondary battery cells 1 arranged linearly. For this reason, the above-described battery holder 20 accommodates therein a large number of secondary battery cells 1 efficiently to provide high capacity. Battery holder 20 that accommodates secondary battery cells 1 in multiple rows and columns is made of resin such that retaining tubular parts 21 are connected in multiple rows and columns. Battery holder 20 is preferably made of material with high insulation property and heat resistance, and is, for example, made of resin, such as polycarbonate or ABS.

### Battery Assembly 10

Secondary battery cells 1 are disposed at fixed positions with battery holder 20 to constitute battery blocks 11 and are accommodated in inner case 3 as battery assembly 10 in which plurality of battery blocks 11 are connected to one another. Battery assembly 10 shown in FIG. 4 includes two battery blocks 11 disposed at the front and rear in the figure. Each battery block 11 includes two battery units 12 partitioned laterally, and each battery unit 12 includes 35 secondary battery cells 1, so that 70 secondary battery cells 1 are disposed in battery block 11 in total. Battery block 11 is partitioned into two battery units 12 via partition gap 24. Each battery unit 12 contains 35 secondary battery cells 1, which are arrayed in seven cells per one row in a lateral direction shown in FIG. 4 and five rows are disposed in a longitudinal direction. In two battery units 12 partitioned laterally, 2×7 secondary battery cells 1 disposed in the extension direction of the battery rows and located in the same straight line are connected by lead plate 13.

### Lead Plate 13

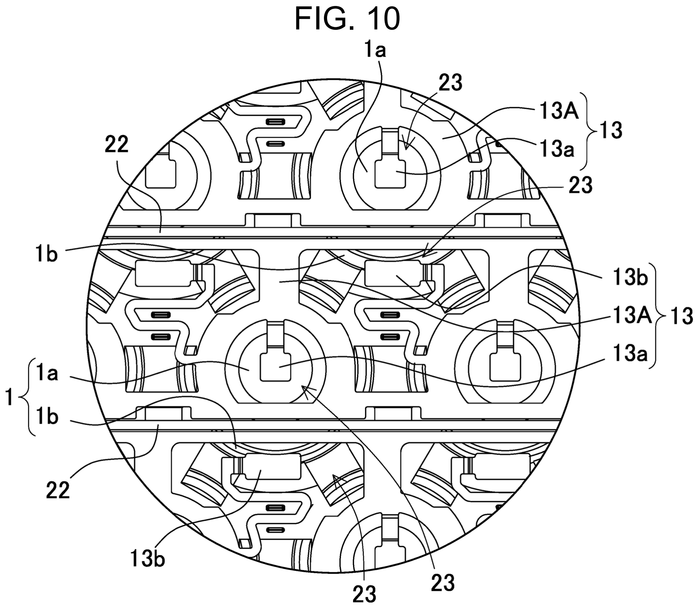

Secondary battery cells 1 accommodated in battery holder 20 are connected to one another with lead plates 13 on the upper surface side of battery holder 20, as illustrated in FIG. 4. Lead plates 13 connect positive and negative electrodes on first end faces 1A of secondary battery cells 1, to connect secondary battery cells 1 in parallel and in series to one another. In secondary battery cells 1 shown in FIG. 10, one of the electrodes is formed by center electrode 1a disposed at a central part of the sealing element and the other electrode is crimped protruding thread 1b of the outer can. Battery blocks 11 between laterally adjacent battery units 12 shown in FIG. 4 include lead plates 13 disposed on the upper surface of battery holder 20 along the linearly arranged battery rows. Lead plates 13 disposed between the battery rows adjacent to each other are configured such that linearly arranged secondary battery cells 1 in one battery row are connected in parallel to each other, secondary battery cells 1 in the other battery row are connected in parallel to each other, and adjacent battery rows are connected in series to each other.

Lead plate 13 shown in FIG. 10 includes main body 13A extending in an extension direction of the battery rows. Lead plate 13 further includes first connection tab 13 protruding from main body 13A and is connected to center electrode 1a of each secondary battery cell 1 in an opposing battery row, and second connection tab 13b protruding from main body 13A and is connected to crimped protruding thread 1b of each secondary battery cell 1 in the adjacent battery row. Insulating walls 22 for insulating adjacent lead plates 13 from each other are disposed between lead plates 13. Insulating walls 22 are located above first end surfaces 1A and deviated from center electrodes 1a of secondary battery cells 1, which form the battery rows, thereby preventing short-circuits between series-connected secondary battery cells 1. Electrode windows 23 opens on both sides of insulating walls 22 to expose center electrodes 1a and crimped protruding threads 1b of secondary battery cells 1.

As described above, lead plates 13 which are disposed between the battery rows adjacent to each other connect 14 secondary battery cells 1 contained in a linearly arranged battery row in parallel to one another and connect secondary battery cells 1 in series to one another between the battery rows disposed adjacent to each other, thereby connecting 70 secondary battery cells 1 in 14 parallel connections and 5 series connections in battery block 11 as a whole. In addition, adjacent battery blocks 11 are connected in series to each other by connecting bus bar 14, so that 140 secondary battery cells 1 are connected in 14 parallel connections and 10 series connections in battery assembly 10 as a whole. Lead plates 13 and connecting bus bar 14 may be made of metal plates, such as nickel and aluminum, with excellent electrical conductivity. The present disclosure is, however, not intended to limit the connecting state of the secondary battery cells to the foregoing. In the battery assembly, the number and arrangement of the secondary battery cells that constitute each battery block may be modified in a variety of ways, and the arrangement of the battery blocks may be modified in a variety of ways.

### Inner Case 3

Inner case 3 shown in FIGS. 5-8 is made of metal and has a box shape in which lower-surface plate 31 and upper-surface plate 32 are joined with outer circumferential walls 33 to accommodate battery assembly 10 containing secondary battery cells 1 therein. Inner case 3 made of a metal plate includes a portion of outer circumferential wall 33 with a laminated structure. In inner case 3 shown in the figures, side walls 33X of outer circumferential wall 33 facing each other have a laminated structure. Inner-side plate 35 and outer-side plate 36 laminated on each other form laminated portion 34.

Laminated portion 34 of inner case 3 shown in FIGS. 7 and 8 has recess 40 partially in the outer surface of inner-side plate 35 facing outer-side plate 36. Recess 40 has a predetermined depth and extends along planar directions. Laminated portion 34 has another recess 40 formed partially in the inner surface of outer-side plate 36 facing inner-side plate 35. Another recess 40 has a predetermined depth and extends in planar directions. As illustrated in FIGS. 2 and 9, inner-side plate 35 and outer-side plate 36 have recesses 40 at positions facing each other. Inner-side plate 35 and outer-side plate 36 are laminated on each other so that recesses 40 face each other to form gas-exhaust duct 4 with a closed structure between inner-side plate 35 and outer-side plate 36.

In inner-side plate 35 and outer-side plate 36 made of metal plates, recesses 40 are formed by a drawing process. Inner-side plate 35 shown in FIG. 9 is subjected to a drawing process to have a predetermined depth in the surface of the inner-side plate 35 facing outer-side plate 36 to provide recess 40. Outer-side plate 36 is subjected to a drawing process as to have a predetermined depth in the surface of outer-side plate 36 facing inner-side plate 35 to provide another recess 40. The depth (d) of recess 40 may range, for example, 3 mm to 5 mm. The inner width (D) of gas-exhaust duct 4 constituted by recesses 40 facing each other may range from 6 mm to 10 mm. Recesses 40 shown in FIGS. 7 and 8 have rectangular shapes viewed from front so as to have a predetermined vertical length (L) extending in a vertical direction of inner-side plate 35 and outer-side plate 36 and have a lateral width (W) extending in a lateral direction. In accordance with the embodiment, the lateral direction is perpendicular to the vertical direction. The vertical length (L), the lateral width (W), and the depth (d) of recesses 40 which form gas-exhaust duct 4 are adjusted to adjust the volumetric capacity of gas-exhaust duct 4.

Inner case 3 shown in FIGS. 5-8 includes gas-exhaust ducts 4 in side walls 33X facing each other. Gas-exhaust ducts 4 may have the same shape and size by, for example, making the vertical length (L) and lateral width (W) of each of recesses 40 equal. Gas-exhaust ducts 4 may be arranged at regular intervals. Gas-exhaust ducts 4 arranged at regular intervals allow the gas filling inside inner case 3 to be exhausted to outside evenly and smoothly. In inner case 3 shown in the figure, gas-exhaust duct 4 having a large lateral width (W) disposed at a central part of side wall 33X, and three gas-exhaust ducts 4 having a smaller lateral width (W) than that of gas-exhaust duct 4 at the central part disposed at regular intervals on each opposite side thereof. The size of gas-exhaust duct 4 is specified by recess 40 which forms gas-exhaust duct 4, and the vertical length (L) of recess 40 may range from 50% to 80% of the height (Z) of outer circumferential wall 33, for example, from 8 cm to 20 cm. The lateral width (W) of recess 40 may change according to the number or interval of gas-exhaust ducts 4 provided in side wall 33X, and may be range, for example, from 5 cm to 25 cm. In inner case 3 in which gas-exhaust duct 4 are provided in side wall 33X, the total of lateral widths (W) of gas-exhaust ducts 4 range, for example, from 40% to 60% of the total length (X) of side wall 33X.

However, the size, shape, and number of gas-exhaust ducts 4 formed in side wall 33X may be changed in several ways. For example, gas-exhaust ducts 4 may be formed such that the lateral width of gas-exhaust duct 4 provided at the central part is wider while the lateral width of gas-exhaust ducts 4 disposed on the opposite sides thereof is narrower, as illustrated in FIG. 5, or that all gas-exhaust ducts 4 have an equal lateral width. Moreover, inner case 3 may change the arrangement and number of gas-exhaust ducts 4 provided in outer circumferential wall 33. The inner case may include gas-exhaust ducts in its end surface walls.

Inner-side plate 35 shown in FIGS. 7-9 has inner-side opening 41 formed in a bottom surface of recess 40. Gas-exhaust duct 4 communicates with the inside of inner case 3 through inner-side opening 41 formed in inner-side plate 35. Outer-side plate 36 shown in FIGS. 7-9 has outer-side opening 42 formed in a bottom surface of recess 40. Gas-exhaust duct 4 communicates with the outside of inner case 3 through outer-side opening 42 formed in outer-side plate 36. In inner case 3 shown in FIGS. 2 and 9, inner-side opening 41 and outer-side opening 42 are located at opposite ends of gas-exhaust duct 4 so as to increase the exhaust path for the gas passing through gas-exhaust duct 4. Gas-exhaust duct 4 shown in the figures is provided in a vertically extending posture, and inner-side opening 41 and outer-side opening 42 are provided at respective upper and lower ends. Gas-exhaust duct 4 increases the exhaust path of gas-exhaust duct 4 by increasing the vertical length (L) of recess 40.

In power supply device 100 shown in FIGS. 2, 3, and 9, secondary battery cells 1 accommodated in inner case 3 are disposed such that first end surface 1A including the relief valve faces upward. In addition, gas-exhaust duct 4 formed in laminated portion 34 of side wall 33X is disposed in a vertically extending posture, and inner-side opening 41 is formed in a lower part of gas-exhaust duct 4 while outer-side opening 42 is formed in an upper part of gas-exhaust duct 4. In the case that secondary battery cells 1 are disposed such that the relief valve is in an upward facing posture in this way, if any of secondary battery cells 1 fails and exhausts gas and other ejected materials, the ejected materials exhausted from the upper surface end of battery assembly 10 flow toward side wall 33X through upper gap 15 formed between the upper surface of battery assembly 10 and upper-surface plate 32 of inner case 3, as indicated by arrows A in FIG. 2. At this moment, as inner-side opening 41 of gas-exhaust duct 4 provided in side wall 33X is formed in a lower portion of side wall 33X, the gas and other ejected materials that have flowed through upper gap 15 toward side wall 33X descend along side gap 16 formed between battery assembly 10 and side wall 33X of inner case 3, and are guided and exhausted through inner-side opening 41 formed in the lower portion of side gap 16 to gas-exhaust duct 4, as indicated by arrows B. This configuration increases the flow path of the gas and other ejected materials exhausted from secondary battery cells 1 to gas-exhaust duct 4 so that the pressure and temperature of the gas may be sufficiently reduced inside inner case 3 before it is exhausted to the outside.

Furthermore, in inner case 3 shown in FIGS. 5-8, inner-side opening 41 and outer-side opening 42 have slit shapes extending in a lateral width direction. The openings with these shapes effectively reduce the pressure and temperature of the gas while increasing the amount of the ejected materials flowing into gas-exhaust duct 4. Inner-side opening 41 and outer-side opening 42 shown in FIGS. 7 and 8 have slit length (s) ranging from 50% to 90% of the lateral width (W) of recess 40 and slit width (t) ranges from 1 to 5 times of the depth (d) of recess 40. Inner case 3 adjusts the flow rate of the gas and other ejected materials that flow into gas-exhaust duct 4 by adjusting aperture areas of inner-side opening 41 and outer-side opening 42.

Inner case 3 as described above in which side walls 33X constitute the laminated structure to form gas-exhaust duct 4 in laminated portion 34 may include lower case 30A and upper case 30B, as illustrated in FIGS. 7 and 8. Lower case 30A includes inner-side plates 35 connected perpendicularly to opposite ends of lower-surface plate 31. Upper case 30B includes outer-side plates 36 connected perpendicularly to opposite ends of upper-surface plate 32.

Inner-side plates 35 of lower case 30A are connected in an upright posture to the opposite ends of lower-surface plate 31 on which battery assembly 10 is placed. Securing pieces 38 for connecting end-surface plate 37 of upper case 30B and closing plates 27 for forming exhaust passage 25 are connected to the opposite ends of lower-surface plate 31. Securing pieces 38 includes securing portions 38A for securing battery holder 20 of battery assembly 10 by bending the tip end portions inward to be in a horizontal posture. Battery assembly 10 is secured to securing portions 38A of securing pieces 38 by fastening screws 19 that penetrate bosses 20a provided on battery holder 20. Insulating sheet 18 is laid on the lower surface of battery assembly 10 secured to lower case 30A to electrically insulate secondary battery cells 1 from lower-surface plate 31. Lower case 30A described above is formed by cutting a metal plate to have a predetermined shape, forming recesses 40 in inner-side plate 35 by a drawing process, opening inner-side openings 41 by a punching process, and performing a bending process to allow inner-side plate 35 and securing pieces 38 to have predetermined postures with respect to lower-surface plate 31.

Outer-side plates 36 of upper case 30B are connected perpendicularly to opposite ends of upper-surface plate 32, and end-surface plate 37 is connected perpendicularly to one end of upper-surface plate 32. Upper case 30B shown in the figures is reinforced with ridges 39 formed in upper-surface plate 32. Ridges 39 protrudes upward relative to the main body of upper-surface plate 32 with a planar shape, and extend in a lateral direction that intersects the extension direction of side walls 33X in plan view. Ridges 39 are parallel to one another and arranged at regular intervals. Upper case 30B is formed by cutting a metal plate to have a predetermined shape, forming other recesses 40 in outer-side plate 36 and ridges 39 in upper-surface plate 32 by a drawing process, opening outer-side opening 42 by a punching process, and performing a bending process such that outer-side plate 36 and end-surface plate 37 are in a predetermined posture with respect to upper-surface plate 32.

As illustrated in FIGS. 2 and 9, inner case 3 is formed by laminating outer-side plate 36 of upper case 30B on the outside of inner-side plate 35 of lower case 30A and connecting lower case 30A to upper case 30B. In this structure, lower case 30A including inner-side plates 35 on opposite ends thereof and upper case 30B including outer-side plates 36 on opposite ends thereof are connected to each other, so that side wall 33X may have a laminated structure readily and easily while gas-exhaust duct 4 is formed in laminated portion 34. Inner-side plate 35 and outer-side plate 36 that are laminated on each other are firmly secured in an intimate contact state by, for example, screw-fastening. Upper case 30B shown in the figures includes end-surface plate 37 connected perpendicularly to one end of upper-surface plate 32. End-surface plate 37 is secured to securing piece 38 connected to one end of lower-surface plate 31 with screws.

The inner case may include a lower case in which outer-side plates are connected perpendicularly to opposite ends of a lower-surface plate, and an upper case in which upper-side plates are connected perpendicularly to opposite ends of the upper-surface plate. In this inner case, the lower case and the upper plate are connected to each other with the inner-side plates provided in the lower case inserted into the inside of the outer-side plates provided in the upper case.

In addition, inner case 3 is closed with one of opposing end surface walls 33Y of outer circumferential wall 33 that is used as end-surface plate 37, and the other one includes exhaust passage 25 with a collision structure. Exhaust passage 25 with a collision structure shown in FIG. 4 includes a pair of collision plates 26 disposed on both side portions of an end surface of inner case 3, and closing plate 27 disposed closer to battery assembly 10 than collision plates 26 and forming gap 28 between closing plate 27 and each of both side walls 33X with it being secured to securing piece 38. The pair of collision plates 26 include bent portions 26A in which tip end portions toward the center side are bent inward, and closing plate 27 includes bent pieces 27A in which both end portions are bent toward collision plates 26. As indicated by the arrows in FIG. 4, exhaust passage 25 of this structure allows the gas passing through gap 28 provided between bent piece 27A of closing plate 27 and side wall 33X to collide with collision plate 26, causes the gas that has changed its flow direction due to closing plate 27 to be diverted toward closing plate 27 by bent portion 26A of collision plate 26 and to collide with closing plate 27, and then, allows the gas to be exhausted through wiring opening 29 formed in the end surface. Exhaust passage 25 prevents the gas and other ejected materials exhausted from secondary battery cells 1 from turning into a straight propagating flame and being sprayed from inner case 3 to the outside, by allowing the lead wires and output lines drawn out from battery assembly 10 to meander non-linearly and draw out of inner case 3.

### Outer Case 5

As illustrated in FIGS. 1-6, outer case 5 has a box shape and a hollow inside to accommodate therein inner case 3 that accommodates battery assembly 10 therein. Outer case 5 shown in the figures includes metal plates combined with one another. In the examples shown in the exploded perspective views of FIGS. 5 and 6, outer case 5 has a box shape in which bottom-surface plate 51 and top-surface plate 52 facing each other are connected to each other with side-surface plates 53 on opposite sides of each of bottom-surface plate 51 and top-surface plate 52 and with end-surface plates 54 on opposite ends of each of bottom-surface plate 51 and top-surface plate 52.

Outer case 5 shown in FIGS. 5 and 6 includes first case 50A, second case 50B, and third case 50C. First case 50A includes side-surface plates 53 connected to opposite ends of top-surface plate 52 and end-surface plate 54 connected to one end of top-surface plate 52. Second case 50B includes bottom-surface plate 51 including securing pieces 55 for securing side-surface plates 53 and end-surface plate 54 of first case 50A to opposite ends and one end of bottom-surface plate 51, respectively. Third case 50C includes closing plate 56 disposed on an end surface of third case 50C that faces end-surface plate 54 of first case 50A. Outer case 5 has a box shape with these cases connected to one another.

In addition, outer case 5 shown in FIGS. 5 and 6 includes ridges 58 in bottom-surface plate 51. Ridges 58 protrude upward with respect to the body of planar-shaped bottom-surface plate 51 and extend in a shorter axis direction of outer case 5. Ridges 58 are disposed in parallel to one another and reinforce bottom-surface plate 51 to which inner case 3 is to be secured.

Outer case 5 shown in FIGS. 5 and 6 further includes ridges 59 in top-surface plate 52. Ridges 59 of top-surface plate 52 protrude downward with respect to the body of top-surface plate 52 with a planar shape and extend in a shorter axis direction of outer case 5. Ridges 59 are disposed parallel to one another. In particular, ridges 59 protruding downward from top-surface plate 52 face ridges 39 protruding upward and provided on upper-surface plate 32 of inner case 3 alternately. In this structure, ridges 59 protruding downward from top-surface plate 52 of outer case 5 are disposed in recesses formed between ridges 39 which protrude upward from the upper-surface plate 32 of inner case 3, so the outer shape of outer case 5 may be prevented from becoming larger while reinforcing outer case 5.

### Holes 57

Outer case 5 has holes 57 provided in a portion of the outer surface for passing a gas in order to exhaust the gas and other ejected materials which are exhausted from secondary battery cells 1 accommodated in inner case 3 out of inner case 3, to the outside of outer case 5 without turning them into a flame. Outer case 5 shown in the figures includes a mesh 57A made of metal disposed in end-surface plate 54 provided on an end surface of the case to form holes 57. However, the outer case may include a punched metal with the holes. The outer case as described above effectively prevents the outer flame ejected to the outside of outer case 5, which results from the ejected materials from secondary battery cells 1, by releasing the high temperature and high pressure gas emitted from the inner case through holes 57 to the outside of outer case 5.

### Circuit Board 61

Power supply device 100 shown in FIGS. 3 to 6 further includes circuit board 61 disposed in circuit board chamber 60 provided in third case 50C and located on the other end surface side of outer case 5. Third case 50C shown in FIGS. 3 and 4 includes circuit board chamber 60 partitioned from the internal space of outer case 5 with shielding plate 62 disposed inside closing plate 56 to protect circuit board 61 from the high-temperature and high-pressure gas and other ejected materials exhausted from inner case 3. Circuit board 61 includes a charge-discharge circuit for charging and discharging secondary battery cells 1, a protective circuit for monitoring the voltage and temperature of secondary battery cells 1 and cutting off electric current in the event of a fault, and the like mounted thereon. Outer case 5 shown in the figures allows positive and negative output terminals 63 and signal terminal 64 that are connected to circuit board 61 to be exposed from closing plate 56 of third case 50C.

Inner case 3 is secured to bottom-surface plate 51 of second case 50B of outer case 5, the lead wires and output lines drawn out from inner case 3 are connected to circuit board 61 of third case 50C secured to second case 50B, and then, first case 50A is connected to second case 50B and third case 50C. Side-surface plates 53 and end-surface plate 54 of first case 50A are secured to securing pieces 55 of second case 50B by securing screws 69, and third case 50C is secured to the other end of first case 50A by securing screws 69, so that outer case 5 has a box shape.

### Exemplary Embodiment 2

Gas-exhaust duct 4 of inner case 3 shown in power supply device 100 in accordance with Embodiment 1 described above is formed by laminating recess 40 provided in the outer surface of inner-side plate 35 on another recess 40 provided in the inner surface of outer-side plate 36 while the recesses face each other, thereby forming closed gas-exhaust duct 4 in laminated portion 34. However, for inner case 3, gas-exhaust duct 4 may be formed by providing recess 40 in only one of inner-side plate 35 and outer-side plate 36.

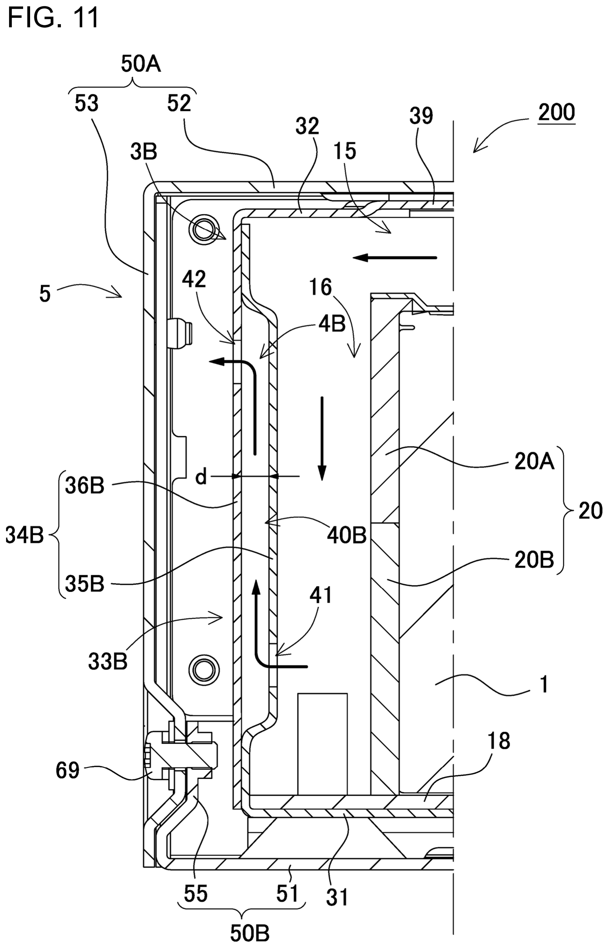

Inner case 3B of power supply device 200 shown in FIG. 11 includes outer-side plate 36B with a planar shape and recess 40B formed only in inner-side plate 35B. Recess 40B of inner-side plate 35B formed in a surface of inner case 3B facing outer-side plate 36B is closed by outer-side plate 36B with a planar shape to form gas-exhaust duct 4B of a closed structure in laminated portion 34B. In gas-exhaust duct 4B, inner-side opening 41 is formed in one end (the lower end in the figure) of recess 40B provided in inner-side plate 35B, and outer-side opening 42 is formed in outer-side plate 36B at an opposing position to the other end (the upper end in the figure) of recess 40B provided in inner-side plate 35B. Inner case 3 may be adjusted in the volumetric capacity of gas-exhaust duct 4B by adjusting the depth (d) of recess 40B provided in inner-side plate 35B. Inner case 3B provides gas-exhaust duct 4B in outer circumferential wall 33B without making the outer shape of inner case 3B larger because of outer-side plate 36B of inner case 3B with the planar shape.

### Exemplary Embodiment 3

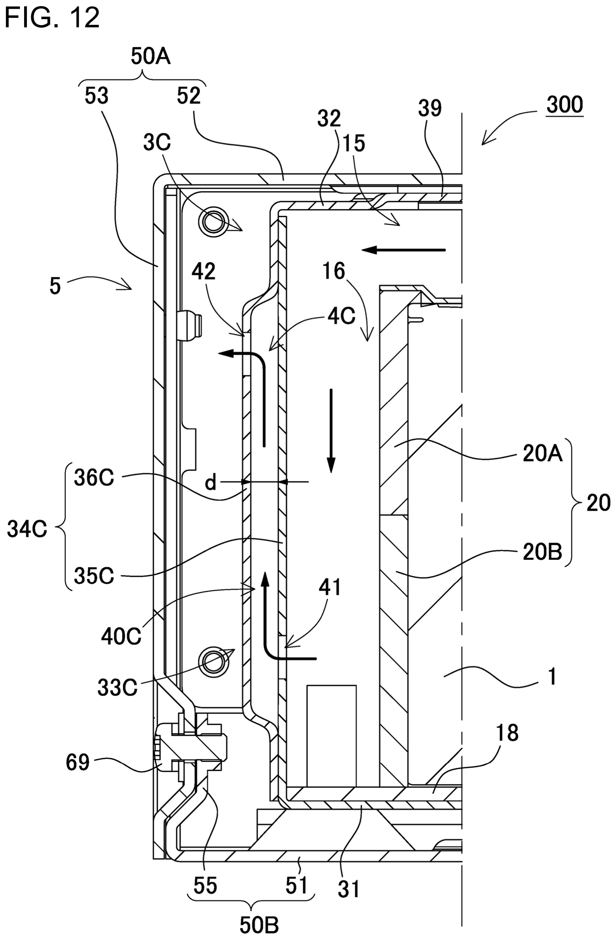

Inner case 3C of power supply device 300 shown in FIG. 12 includes inner-side plate 35C with a planar shape and recess 40C formed only in outer-side plate 36C. Recess 40C of outer-side plate 36C formed in a surface of inner case 3C facing inner-side plate 35C is closed by inner-side plate 35Cwith the planar shape to form gas-exhaust duct 4C of a closed structure in laminated portion 34C. In gas-exhaust duct 4C, outer-side opening 42 opens in one end (the upper end in the figure) of recess 40C provided in outer-side plate 36C, and inner-side opening 41 opens in inner-side plate 35C at a position facing the other end (the lower end in the figure) of recess 40C provided in outer-side plate 36C. Inner case 3C is adjusted in the volumetric capacity of gas-exhaust duct 4C by adjusting the depth (d) of recess 40C provided in inner-side plate 35C. Inner case 3C allows the inner shape of inner case 3C to be smaller because of inner-side plate 35C with the planar shape, thereby providing gas-exhaust duct 4C in outer circumferential wall 33C without making the outer shape of inner case 3C larger.

### Exemplary Embodiment 4

### Triple Wall Structure

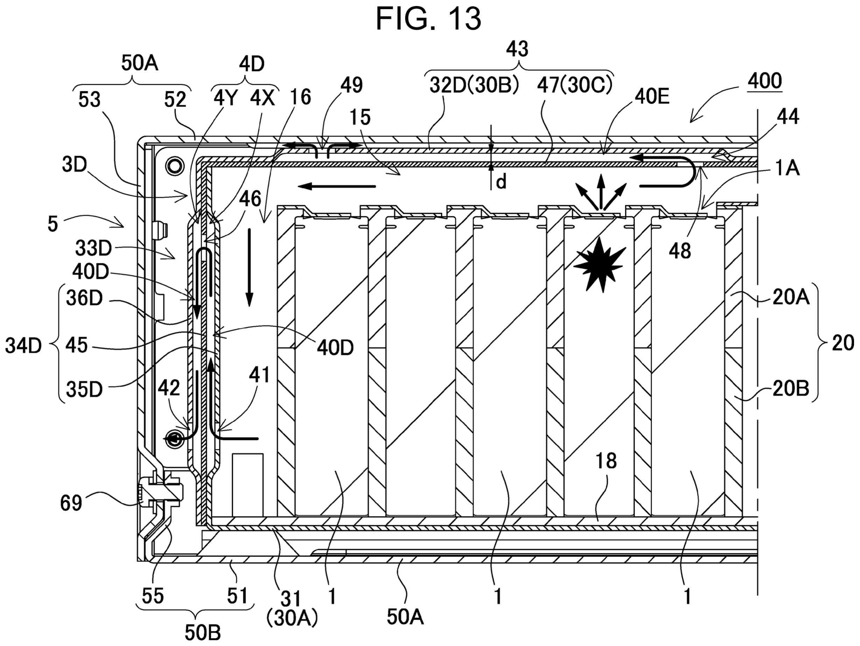

Inner cases 3, 3B, and 3C in accordance with the foregoing embodiments include laminated portions 34, 34B, and 34C in a double wall structure of inner-side plates 35, 35B, and 35C and outer-side plates 36, 36B, and 36C, respectively. However, the laminated portion of the inner case may have a triple wall structure. Laminated portion 34D of inner case 3D of power supply device 400 shown in FIG. 13 includes intermediate plate 45 with a planar shape disposed between light inner-side plate 35D and outer-side plate 36D to form a triple wall structure. Inner-side plate 35D has recess 40D formed in a surface of inner-side plate 35D facing intermediate plate 45, and outer-side plate 36D has another recess 40D formed in a surface of the outer-side plate 36d facing intermediate plate 45. Recess 40D of inner-side plate 35D and another recess 40D of outer-side plate 36D face each other and laminated on intermediate plate 45 to form gas-exhaust duct 4D in a closed structure. Gas-exhaust duct 4D is partitioned into inner duct 4X and outer duct 4Y with intermediate plate 45. Inner duct 4X and outer duct 4Y communicate with each other at one of their end portions through intermediate opening 46 formed in intermediate plate 45. In addition, in gas-exhaust duct 4D, inner-side opening 41 is formed in the other end portion of inner duct 4X, and outer-side opening 42 is formed in the other end portion of outer duct 4Y.

As described above, the structure in which gas-exhaust duct 4D is partitioned into inner duct 4X and outer duct 4Y with intermediate plate 45 disposed between inner-side plate 35D and outer-side plate 36D connects respective one ends of inner duct 4X and outer duct 4Y with intermediate opening 46, thereby allowing gas-exhaust duct 4D to have a U-shape in which inner duct 4X and outer duct 4Y are connected to each other by intermediate opening 46. Inner-side opening 41 and outer-side opening 42 are formed at opposite ends of the U-shape of gas-exhaust duct 4D. As a result, gas-exhaust duct 4D has a long gas-exhaust path. In inner case 3D shown in FIG. 13, inner-side opening 41 is formed near the lower end of inner duct 4X, intermediate opening 46 is formed near the upper ends of inner duct 4X and outer duct 4Y, and outer-side opening 42 is formed near the lower end of outer duct 4Y. This configuration allows the gas exhausted from secondary battery cells 1 with the relief valves facing upward to flow from the upper surface end of inner case 3D toward the lower end, then to be guided through inner-side opening 41 formed near the lower end into inner duct 4X, then to be guided through intermediate opening 46 formed near the upper end into outer duct 4Y, and then, to be exhausted through outer-side opening 42 formed near the lower end to the outside of inner case 3D. Thus, the flow path is long to allow the gas exhausted from secondary battery cells 1 in the upper surface side of inner case 3D to flow into inner-side opening 41 formed near the lower end, and the exhaust path is long by passing the gas through gas-exhaust duct 4D with the U-shape, so that the gas may be exhausted to the outside of inner case 3D with its pressure and temperature further reduced.

Intermediate plate 45 disposed between inner-side plate 35D and outer-side plate 36D may be a single flat plate. However, inner case 3D shown in FIG. 13 includes intermediate case 30C in which intermediate plate 45 is connected perpendicularly to opposite ends of inner-surface plate 47 laminated on the inside of upper-surface plate 32D, intermediate case 30C is disposed between lower case 30A and upper case 30B. This configuration reinforces the upper surface of inner case 3D by a laminated structure of upper-surface plate 32D and inner-surface plate 47 while allowing pair of intermediate plates 45 disposed on opposing outer circumferential walls 33D to be disposed easily and reliably between inner-side plate 35D and outer-side plate 36D. This structure effectively reinforces a portion directly hit by the high-temperature and high-pressure ejected materials exhausted from secondary battery cells 1 disposed in such a posture that their relief valves face upward.

### Upper Laminated Portion 43

Inner case 3D shown in FIG. 13 further includes upper laminated portion 43 including inner-surface plate 47 laminated to the inside of upper-surface plate 32D. Upper laminated portion 43 has recess 40E partially formed therein. Recess 40E extends in a lateral direction intersecting the extension direction of outer-side plate 36 in plan view, and is disposed in a surface of upper laminated portion 43 facing inner-surface plate 47 that is on the inner surface side of upper-surface plate 32D, so that recess 40E may constitute upper gas-exhaust duct 44 closed between upper-surface plate 32D and inner-surface plate 47. In inner case 3D, the volumetric capacity of upper gas-exhaust duct 44 may be adjusted by adjusting the depth (d) of recess 40E provided in upper-surface plate 32D. Recess 40E may be used as ridges 39 described above. Upper gas-exhaust duct 44 communicates with the inside of inner case 3D through inner-surface opening 48 formed in inner-surface plate 47 and also communicates with the outside of inner case 3D through upper-surface opening 49 formed in upper-surface plate 32D. Upper gas-exhaust duct 44 shown in the figure includes inner-surface opening 48 formed at a laterally middle position of upper-surface plate 32D and upper-surface opening 49 formed at laterally opposite end positions of upper-surface plate 32D.

Inner case 3D with this structure allows its upper surface to have a laminated structure to form upper gas-exhaust duct 44 between upper-surface plate 32D and inner-surface plate 47, so that the gas and other ejected materials exhausted from secondary battery cells 1 may pass through upper gas-exhaust duct 44 and exhausted to the outside. As a result, the gas is exhausted also from the upper surface of inner case 3D while reducing its pressure and temperature. In particular, inner-surface opening 48 formed at a laterally middle position of inner-surface plate 47 and upper-surface opening 49 formed at laterally opposite end positions of upper-surface plate 32D in upper gas-exhaust duct 44 allow the ejected material ejected from a center area of secondary battery cells 1 accommodated in inner case 3D to effectively pass through upper gas-exhaust duct 44 and to be exhausted to the outside. Therefore, even if a fault condition occurs in secondary battery cell 1 in the center area, the ejected materials are quickly exhausted outside, so that adverse effects on surrounding secondary battery cells 1 can be reduced.

### Exemplary Embodiment 5

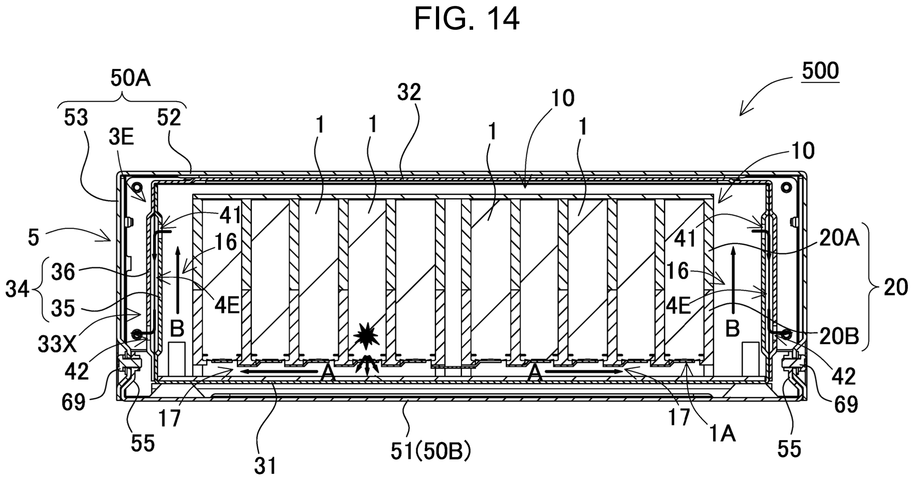

In the power supply devices illustrated in the foregoing exemplary embodiments, secondary battery cells 1 accommodated in inner case 3 are disposed such that first end surface 1A including the relief valve faces upward. However, the power supply device of the present disclosure does not particularly specify the orientation of the secondary battery cells accommodated in the inner case. In power supply device 500 shown in FIG. 14, secondary battery cells 1 accommodated in inner case 3E are disposed such that end surface 1A including the relief valve faces downward. In power supply device 500 shown in FIG. 14, gas-exhaust duct 4E formed in laminated portion 34 of side wall 33X extends upward and downward, and inner-side opening 41 is formed in an upper part of gas-exhaust duct 4E while outer-side opening 42 is formed in a lower part of gas-exhaust duct 4. In the case that secondary battery cells 1 are disposed such that the relief valve faces downward, if any of secondary battery cells 1 fails and exhausts gas and other ejected materials, the ejected materials exhausted from the lower surface end of battery assembly 10 flow toward side wall 33X through lower gap 17 formed between the lower surface of battery assembly 10 and lower-surface plate 31 of inner case 3E, as indicated by arrows A in FIG. 14. At this moment, as inner-side opening 41 of gas-exhaust duct 4E provided in side wall 33X is formed in an upper portion of side wall 33X, the gas and other ejected materials that have flowed through lower gap 17 toward side wall 33X upward along side gap 16 formed between battery assembly 10 and side wall 33X of inner case 3E, and are guided and exhausted through inner-side opening 41 formed in the upper portion of side gap 16 to gas-exhaust duct 4E, as indicated by arrows B. This configuration allows the flow path of the gas and other ejected materials exhausted from secondary battery cells 1 to gas-exhaust duct 4E to be long so that the pressure and temperature of the gas may be sufficiently reduced inside inner case 3E before it is exhausted to the outside.

Further, the secondary battery cells accommodated in the inner case may be disposed such that the first end surfaces 1 including the relief valves face upward and downward alternately. In the power supply device with this structure, it is impossible to identify which of the upward facing secondary battery cells and the downward facing secondary battery cells may undergo a failure and exhaust gas and other ejected materials, and provides a risk that the gas and other ejected materials may be exhausted from both of the upward facing secondary battery cells and the downward facing secondary battery cells due to spreading fire or the like. Accordingly, in such a power supply device in which the first end surfaces including the relief valves face upward and downward alternately, while the gas-exhaust ducts formed in the laminated portions of the side walls extend upward and downward, the respective positions of the inner-side opening and the outer-side opening may be reversed alternately between the gas-exhaust ducts adjacent to each other. In other words, it is possible to alternately dispose a gas-exhaust duct with the inner-side opening formed in its lower part and the outer-side opening formed in its upper part and another gas-exhaust duct with the inner-side opening formed in its upper part and the outer-side opening formed in its lower part. This configuration allows the gas to be exhausted with the pressure and temperature of the gas reduced in a well-balanced manner through the gas-exhaust ducts in which the opening positions of the inner-side opening and the outer-side opening are reversed alternately while the gas and other ejected materials are exhausted from either the upper surface side or the lower surface side of the battery assembly, or even while the gas and other ejected materials are exhausted from both the upper surface side and the lower surface side of the battery assembly.

### INDUSTRIAL APPLICABILITY

A power supply device according to the present disclosure may be suitably used in stationary-type electricity storage applications, such as power sources for electricity storage systems for home uses, office uses, and factory uses and backup power sources for servers, or in power sources for vehicles such as hybrid electric vehicles and battery electric vehicles.

### REFERENCE MARKS IN THE DRAWINGS

100, 200, 300, 400, 500 power supply device
1 battery cell
1A first end face
1a center electrode
1b crimped protruding thread
3, 3B, 3C, 3D, 3E inner case
4, 4B, 4C, 4D, 4E gas-exhaust duct
4X inner duct
4Y outer duct
5 outer case
10 battery assembly
11 battery block
12 battery unit
13 lead plate
13A main body
13a first connecting tab
13b second connecting tab
14 connecting bus bar
15 upper gap
16 side gap
17 lower gap
18 insulating sheet
19 fastening screw
20 battery holder
20A first holder
20B second holder
20a boss
21 retainer
22 insulating wall
23 electrode window
24 partition gap
25 exhaust passage
26 collision plate
26A bent portion
27 closing plate
27A bent piece
28 gap
29 wiring opening
30A lower case
30B upper case
30C intermediate case
31 lower-surface plate
32, 32D upper-surface plate
33, 33B, 33C, 33D outer circumferential wall
33X side wall
33Y end face wall
34, 34B, 34C, 34D laminated portion
35, 35B, 35C, 35D inner-side plate
36, 36B, 36C, 36D outer-side plate
37 end-surface plate
38 securing piece
38A securing portion
39 ridge
40, 40B, 40C, 40D, 40E recess
41 inner-side opening
42 outer-side opening
43 upper laminated portion
44 upper gas-exhaust duct
45 intermediate plate
46 intermediate opening
47 inner-surface plate
48 inner-surface opening
49 upper-surface opening
50A first case
50B second case
50C third case
51 bottom-surface plate
52 top-surface plate
53 side-surface plate
54 end-surface plate
55 securing piece
56 closing plate
57 hole
57A metal mesh
58 ridge
59 ridge
60 circuit board chamber
61 circuit board
62 shielding plate
63 output terminal
64 signal terminal
69 securing screw

## Claims

1. A power supply device comprising:
a plurality of secondary battery cells, each of the plurality of secondary battery cells including a relief valve configured to open when an internal pressure of the each of the plurality of secondary battery cells exceeds a predetermined pressure;
an inner case accommodating the plurality of secondary battery cells therein; and
an outer case covering the inner case, wherein
the inner case includes an inner-side plate and an outer-side plate which constitute an outer circumferential wall of the inner case, and a portion of the inner-side plate and a portion of the outer-side plate overlap each other at a laminated portion constituting a laminated structure of the inner case,
the laminated portion has a recess partially provided in one or both of a surface of the inner-side plate and a surface of the outer-side plate which face each other, the recess having a predetermined depth and extending in planar directions, the recess constituting a gas-exhaust duct closed between the inner-side plate and the outer-side plate,
the gas-exhaust duct communicates with an inside of the inner case through an inner-side opening formed in the inner-side plate and communicates with an outside of the inner case through an outer-side opening formed in the outer-side plate, and
the inner-side opening and the outer-side opening are disposed at opposite ends of the gas-exhaust duct.

2. The power supply device according to claim 1, wherein
the surface of the inner-side plate facing the outer-side plate has the recess formed therein,
the surface of the outer-side plate facing the inner-side plate has another recess formed therein, and
the recess of the inner-side plate and the another recess of the outer-side plate face each other to form the gas-exhaust duct with a closed structure.

3. The power supply device according to claim 1, wherein
the surface of the inner-side plate facing the outer-side plate has the recess formed therein,
the outer-side plate has a planar shape, and
the recess of the inner-side plate is closed by the outer-side plate to form the gas-exhaust duct of a closed structure.

4. The power supply device according to claim 1, wherein
the surface of the outer-side plate facing the inner-side plate has the recess formed therein,
the inner-side plate has a planar shape, and
the recess of the outer-side plate is closed by the inner-side plate to form the gas-exhaust duct of a closed structure.

5. The power supply device according to claim 1, wherein
the laminated portion of the inner case includes an intermediate plate disposed between the inner-side plate and the outer-side plate,
a surface of the inner-side plate facing the intermediate plate has the recess formed therein,
a surface of the outer-side plate facing the intermediate plate has another recess formed therein,
the recess of the inner-side plate and the another recess of the outer-side plate are laminated on the intermediate plate at a position such that the recess of the inner-side plate faces the another recess of the outer-side plate to form the gas-exhaust duct of a closed structure,
the gas-exhaust duct is partitioned into an inner duct and an outer duct by the intermediate plate,
the inner duct and the outer duct communicate with each other through an intermediate opening formed in the intermediate plate at one of one end portion of the inner duct and one end portion of the outer duct, and
the inner-side opening is formed at another end portion of the inner duct, and the outer-side opening is formed at another end portion of the outer duct.

6. The power supply device according to any one of claims 1 to 5, wherein:
the inner case includes an upper-surface plate and an inner-surface plate, the upper-surface plate being connected to outer-side plates at opposite ends thereof, each of the outer-side plates being the outer-side plate, a portion of the upper-surface plate and a portion of the inner-surface plate being laminated on each other to constitute an upper laminated portion,
an inner surface of the upper-surface plate facing the inner-surface plate at the upper laminated portion has a recess partially formed therein, the recess extending in a width direction intersecting an extending direction of the outer-side plate in plan view, the recess constituting a upper gas-exhaust duct od a closed structure between the upper-surface plate and the inner-surface plate,
the upper gas-exhaust duct communicates with an inside of the inner case through an inner-surface opening formed in the inner-surface plate and communicates with an outside of the inner case through upper-surface openings formed in the upper-surface plate; and
the inner-surface opening is formed at a laterally middle position of the upper-surface plate, and the upper-surface openings are formed on laterally opposite end positions of the upper-surface plate.

7. The power supply device according to any one of claims 1 to 5, wherein the inner case is made of metal, and the recess is formed in the inner-side plate or the outer-side plate by a drawing process.

8. The power supply device according to any one of claims 1 to 5, wherein a plurality of gas-exhaust ducts are provided in opposing side walls of the inner case, each of the plurality of gas-exhaust ducts being the gas-exhaust duct.

9. The power supply device according to any one of claims 1 to 4, wherein:
the inner case includes:
a lower case including a lower-surface plate and inner-side plates connected perpendicularly to opposite ends of the lower-surface plate, each of the inner-side plates being the inner-side plate; and
an upper case including an upper-surface plate and outer-side plates connected perpendicularly to opposite ends of the upper-surface plate, each of the outer-side plates being the outer-side plate, and
the lower case and the upper case are connected to each other such that each of the inner-side plates is laminated on a corresponding one of the outer-side plates.

10. The power supply device according to any one of claims 1 to 4, wherein
the each of the plurality of secondary battery cells is disposed in the inner case such that a surface of the each of the plurality of secondary battery cells at which the relief valve is disposed faces upward, and
the gas-exhaust duct extends upward and downward, such that the inner-side opening opens in a lower part of the gas-exhaust duct, and the outer-side opening opens in an upper part of the gas-exhaust duct.

11. The power supply device according to any one of claims 1 to 4, wherein
the each of the plurality of secondary battery cells is disposed in the inner case such that a surface of the each of the plurality of secondary battery cells at which the relief valve is provided faces downward, and
the gas-exhaust duct extends upward and downward, such that the inner-side opening opens in an upper part of the gas-exhaust duct, and the outer-side opening opens in a lower part of the gas-exhaust duct.

12. The power supply device according to claim 10 or 11, wherein
the recess constituting the gas-exhaust duct extends upward and downward, has a rectangular shape in front view, and has a lateral width extending in a lateral direction, and
the inner-side opening and the outer-side opening have slit shapes extending in a direction of the lateral width.

13. The power supply device according to any one of claims 1 to 5, wherein
the outer case has a plurality of holes formed in an outer surface of the outer case, the plurality of holes being configured to allow gas to pass through, and
the plurality of holes are made of a metal mesh or a punched metal.
